Europäisches Patentamt

European Patent Office

Office européen des brevets

(19)

(11) Numéro de publication: **0 147 288**
**B1**

(12) **FASCICULE DE BREVET EUROPÉEN**

(45) Date de publication du fascicule du brevet:
04.11.87

(21) Numéro de dépôt: **84402568.4**

(22) Date de dépôt: **12.12.84**

(51) Int. Cl.⁴: **F 16 L 11/08,** F 16 L 11/11, F 16 L 11/16

(54) Conduite flexible ne présentant pas de variation notable de longueur, sous l'effet d'une pression interne.

(30) Priorité: **22.12.83 FR 8320754**

(43) Date de publication de la demande:
**03.07.85 Bulletin 85/27**

(45) Mention de la délivrance du brevet:
**04.11.87 Bulletin 87/45**

(84) Etats contractants désignés:
**BE DE GB IT NL**

(56) Documents cité:
**DE-B-1 262 702**
**FR-A-1 417 966**
**FR-A-2 177 996**
**FR-A-2 217 621**
**FR-A-2 229 538**
**FR-A-2 260 740**
**GB-A-2 059 538**
**US-A-2 747 616**

(73) Titulaire: **INSTITUT FRANCAIS DU PETROLE, 4, Avenue de Bois- Préau, F-92502 Rueil- Malmaison (FR)**

(72) Inventeur: **Bournazel, Claude, 4, allée des Tilleuls Cernay La Ville, F-78720 Dampierre (FR)**
Inventeur: **Feret, Jany, 14, avenue de l'Europe, F-78160 Marly Le Roi (FR)**

(74) Mandataire: **Aubel, Pierre, Institut Français du Pétrole Département Brevets 4, avenue de Bois Préau, F-92502 Rueil- Malmaison (FR)**

EP 0 147 288 B1

LIBER, STOCKHOLM 1987

## Description

La présente invention concerne une nouvelle structure de conduite flexible ne présentant pas de variation sensible de longueur sous l'effet d'une pression interne.

L'invention s'applique, notamment, à la réalisation de conduites flexibles de transport de fluides sous pression, tels que de l'eau ou des hydrocarbures.

Pour de nombreuses applications de telles conduites, il est souvent souhaitable et parfois nécessaire de disposer de flexibles ne manifestant aucune variation notable de longueur lorsqu'ils sont soumis à une pression interne avec "effet de fond", c'est-à-dire application d'une force axiale résultant de l'action de la pression interne aux extrémités du flexible.

En effet, un allongement du flexible en service, sous l'effet de la pression interne, risque d'être un inconvénient sérieux dans de nombreuses applications.

C'est le cas notamment pour les conduites de collecte sous-marines qui doivent être ensouillées, c'est-à-dire disposées au fond d'une tranchée, pour éviter les risques de détérioration dûs à la navigation.

Si la conduite ainsi disposée a tendance à s'allonger lorsqu'on la met sous pression, elle risque de se déformer verticalement et de resurgir hors de la tranchée, ce qui annule évidemment l'effet de l'ensouillage.

Les structures de flexibles armés "multinappes" auxquelles s'applique le perfectionnement selon l'invention, comprennent principalement:

- une armature de résistance à la pression comprenant une ou plusieurs nappes d'anneaux ou de fils, câbles ou profilés enroulés sous un angle élevé par rapport à l'axe du flexible (cet angle pouvant dépasser 85°);

- une armure de résistance à la traction, comprenant un ou plusieurs couples de nappes croisées de fils, câbles ou profilés enroulés sous un angle au plus égal à 55°, cet angle ne devant pas cependant être trop faible pour préserver la flexibilité de la conduite.

Ces différentes nappes peuvent être disposées dans un ordre quelconque de l'intérieur à l'extérieur de la structure du flexible, et être séparées ou non par des gaines plastiques de faible épaisseur.

De telles structures ont été par exemple décrites dans les document FR-A-1 417 966 et FR-A-2 177 996.

Le document US-A-2 747 616 propose d'adopter un angle d'enroulement des fibres disposées en hélice supérieur à 55° pour répondre au problème de l'augmentation de la raideur en flexion, mais ce brevet concerne la réalisation d'un tuyau rigide et non pas d'un tube flexible.

On définit la raideur K d'une armure, proportionnelle au module d'élasticité E du matériau constituant les nappes de celle-ci et à la quantité de ce matériau par le produit

$$K = E.e$$

où e, épaisseur totale utile, est en fait l'épaisseur totale des nappes de l'armure quand ces nappes sont constituées de fils pleins rectangulaires et jointifs. Quand il s'agit de fils creux, ronds ou de profilés, l'épaisseur utile se déduit de l'épaisseur totale $e_g$ en tenant compte des vides ou jeux ménagés à l'intérieur des fils ou entre ces derniers, on a:

$$e = b.e_g$$

où b est le rapport du volume de matériau résistant constituant l'armure au volume total occupé par celle-ci.

On attribue l'indice p à l'armure de résistance à la pression interne et t à l'armure de résistance à la traction.

Ainsi

$$K_p = E_p.e_p \text{ et } K_t = E_t.e_t$$

Dans les flexibles selon l'art antérieur, où l'on recherche avant tout à bien répartir les contraintes dans les différentes nappes d'armures dans le but de réduire l'épaisseur totale et donc le poids et le prix du flexible, le rapport $K_t/K_p$ est faible (inférieur à l'unité).

Mais ce type de structure ne peut conduire à des flexibles stables en longueur sous l'effet de la pression interne. Dans l'état actuel de la technique on est conduit, pour réduire le plus possible l'allongement, à câbler l'armure de résistance à la traction avec un angle $\alpha$ très faible ($< 20°$) ce qui entraîne de grandes difficultés de fabrication et ne permet cependant pas de réduire suffisamment cet allongement pour de nombreuses applications, notamment dans le cas indiqué ci-dessus des conduites de collecte sous-marines qui doivent être ensouillées.

Pour éviter des variations de longueur sous l'effet de la pression interne, on propose selon l'invention:

- une structure de flexible du type de celle décrite précédemment, mais dont le rapport des raideurs $K_t/K_p$ est compris entre 2,5 et 8 pour un angle de câblage des armures de traction $\alpha$ (Fig. 4) compris entre 20° et 50°.

- un meilleur résultat est obtenu lorsque le rapport des raideurs et l'angle $\alpha$ sont liés par les relations:

$$0,75 < \tfrac{K_t}{K_p} (0,056 \, \alpha - 0,0008 \, \alpha^2 - 0,65) < 1,25$$

où $\alpha$, exprimé en degrés est compris entre 20 et 50.

- afin de réduire l'influence d'une erreur sur l'angle de câblage, c'est-à-dire d'accroître la tolérance acceptable sur ce paramètre de fabrication, on préférera une structure telle que

$$0,90 < \tfrac{K_t}{K_p} (0,056 \, \alpha - 0,0008 \, \alpha^2 - 0,65) < 1,10$$

où $\alpha$ en degrés est limité entre 25 et 45.

Ainsi, en réalisant un flexible tel que le rapport des raideurs d'armures $K_t/K_p = 3$, où les nappes de traction sont câblées à 35°, on obtient une variation de longueur sous pression au moins dix fois plus faible que ce que l'on sait faire actuellement avec des structures classiques, tout en pouvant accepter une tolérance de 10 % sur le rapport des raideurs et de 2 à 3° sur l'angle de câblage.

Les figures ci-annexées montrent des conduites flexibles armées auxquelles s'applique l'invention:
- la figure 1 illustre un premier type de conduites flexibles armées,
- les figures 2 et 3 représentent d'autres types de conduites, et
- la figure 4 est un schéma montrant l'angle d'enroulement des nappes d'armure de résistance à la traction.

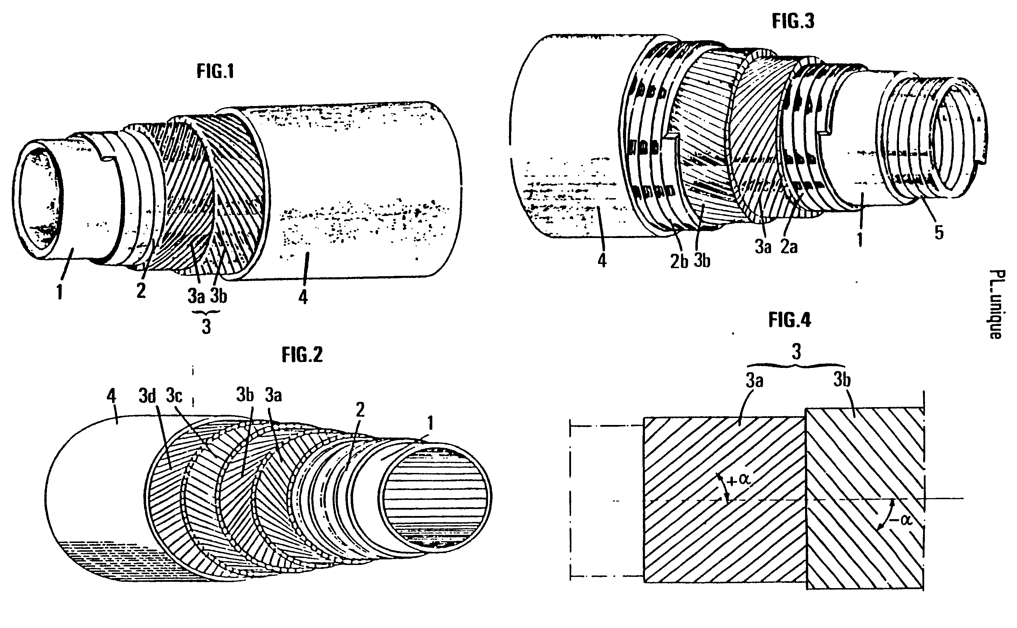

Sur la figure 1, la référence 1 désigne un conduit interne pouvant être constitué en matière plastique, par exemple en nylon.

Ce conduit est recouvert d'une armure 2 de résistance à la pression, qui dans l'exemple illustré est constitué par l'enroulement d'un feuillard ou d'un profilé préformé, enroulé hélicoïdalement sous un angle dépassant, par exemple, 85° par rapport à l'axe de la conduite.

L'ensemble est recouvert d'une armure 3 de résistance à la traction constituée de deux nappes croisées 3a et 3b de profilés enroulées hélicoïdalement avec des pas opposés dans les deux nappes.

La valeur absolue de l'angle $\alpha$ d'enroulement de ces profilés a une valeur comprise entre 20° et 50° par rapport à l'axe de la conduite.

Une gaine externe 4, par exemple en nylon, recouvre l'ensemble ainsi constitué.

Un autre type de conduite flexible armée est illustré par la figure 2.

Les mêmes références numériques ont été utilisées sur cette figure pour désigner les éléments analogues à ceux illustrés par la figure 1.

Dans ce deuxième type de conduite flexible, l'armure de résistance à la traction comprend deux couples de nappes croisées (3a, 3b) et (3c, 3d) de profilés enroulées en hélice sous un angle pouvant être compris entre 20 et 50° par rapport à l'axe de la conduite.

Dans le type de conduite illustré par la figure 3, une carcasse en acier 5 a été disposée à l'intérieur du conduit 1 en matière plastique et les nappes 2a et 2b de l'armure de résistance à la pression interne ont été disposées de part et d'autre de l'armure (3a, 3b) de résistance à la traction.

Dans ce mode de réalisation illustré par la figure 3, on ne tiendra pas compte de la carcasse 5 pour le calcul de la raideur $K_p$ de l'armure de résistance à la pression interne si cette carcasse n'est pas étanche et, par conséquent, n'est pas soumise à une pression différentielle lorsqu'un fluide sous pression circule dans la conduite (donc ne contribue pas à la résistance de la conduite à la pression interne). Dans la structure selon l'invention, on obtient une meilleure répartition de contraintes et donc une diminution de l'épaisseur totale si on choisit pour réaliser l'armure de résistance à la pression un matériau dont le module d'élasticité $E_p$ est nettement plus faible que $E_t$.

Ainsi, si les nappes d'armures de résistance à la traction sont en acier ($E_t \cong 200$ GPa), on pourra par exemple réaliser l'armure de résistance à la pression avec un matériau composite (résine armée de fibre de verre ou d'autres filaments), ce matériau ayant un module d'élasticité plus faible (E de 30 à 60 GPa). Un tel matériau présente, en outre, l'avantage de résister à des contraintes élevées tout en ayant une faible densité. On obtient alors un flexible non seulement allégé, mais stable sous l'effet de la pression interne. On peut également envisager de réaliser l'armure de résistance à la pression interne en alliage d'aluminium, de titane, ou en tout autre matériau de faible module d'élasticité.

## Revendications

1. Conduite flexible armée comportant une armure (2) de résistance à la pression interne comprenant au moins une nappe (2a, 2b) formée d'anneaux, ou de fils, câbles ou profilés enroulés sous un angle élevé par rapport à l'axe de la conduite et une armure (3) de résistance à la traction comprenant au moins un couple de nappes (3a, 3b, 3c, 3d) croisées de fils, câbles ou profilés enroulés sous un angle au plus égal à 55° par rapport à l'axe de la conduite, caractérisée en ce que le rapport

$$\frac{K_t}{K_p}$$

de la raideur de l'armure de résistance à la traction à la raideur de l'armure de résistance à la pression interne est compris entre 2,5 et 8 pour une valeur $\alpha$ de l'angle d'enroulement de l'armure de résistance à la traction comprise entre 20° et 50° par rapport à l'axe de la conduite, la raideur K de chaque armure étant définie par le produit

$$K = E.e,$$

où E est le module d'élasticité du matériau constituant l'armure considérée et e est l'épaisseur totale utile de cette armure.

2. Conduite flexible selon la revendication 1, caractérisée en ce que le rapport

$$\frac{K_t}{K_p}$$

des raideurs et l'angle $\alpha$ satisfont aux relations

$$0,75 < \frac{K_t}{K_p} (0,056 \alpha - 0,0008 \alpha^2 - 0,65) < 1,25$$

la valeur de $\alpha$, exprimée en degrés, étant comprise entre 20 et 50.

3. Conduite flexible selon la revendication 1, caractérisée en ce que le rapport

$$\frac{K_t}{K_p}$$

des raideurs et l'angle $\alpha$ satisfont aux relations

$$0{,}90 < \tfrac{K_t}{K_p} (0{,}056\,\alpha - 0{,}0008\,\alpha^2 - 0{,}65) < 1{,}10$$

la valeur de $\alpha$ exprimée en degrés étant comprise entre 25 et 45.

4. Conduite flexible selon l'une quelconque des revendications précédentes, caractérisée en ce que l'armure de résistance à la pression interne est réalisée en un matériau dont le module d'élasticité $E_p$ est nettement plus faible que le module d'élasticité $E_t$ du matériau constituant l'armure de résistance à la traction.

5. Conduite flexible selon la revendication 4, caractérisée en ce que l'armure de résistance à la pression est réalisée en résine armée et l'armure de résistance à la traction est en acier.

## Patentansprüche

1. Flexible armierte Leitung bzw. armierter Schlauch mit einer gegen Innendruck beständigen Bewehrung (2) mit wenigstens einer Bahn (2a, 2b), die aus Ringen oder Drähten bzw. Fäden, Seilen oder Kabeln oder Profilen gebildet ist, welche unter einem erhöhten Winkel zur Achse des Schlauchs gewickelt sind und einer zugbeständigen Bewehrung (3) mit wenigstens einem Paar von Bahnen (3a, 3b, 3c, 3d), deren Fäden, Kabel oder Profile sich kreuzen und unter einem Winkel von höchstens gleich 55° zur Achse des Schlauchs gewickelt sind, dadurch gekennzeichnet, daß das Verhältnis $\tfrac{K_t}{K_p}$ der Steifigkeit der Bewehrung gegen Zug zur Steifigkeit der Bewehrung gegen Innendruck zwischen 2,5 und 8 für einen Wert $\alpha$ des Wicklungswinkels der zugbeständigen Bewehrung zwischen 20° und 50° zur Achse der Leitung liegt, wobei die Steifigkeit K jeder Bewehrung definiert ist durch das Produkt $K = E.e$, wo E der Elastizitätsmodul des die betrachtete Bewehrung bildenden Materials und e die gesamte Nutzdicke dieser Bewehrung ist.

2. Flexible Leitung bzw. Schlauch nach Anspruch 1, dadurch gekennzeichnet, daß das Verhältnis $\tfrac{K_t}{K_p}$ der Steifigkeiten und der Winkel den Beziehungen

$$0{,}75 < \tfrac{K_t}{K_p} (0{,}056\,\alpha - 0{,}0008\,\alpha^2 - 0{,}65) < 1{,}25$$

genügen, wobei der Winkel $\alpha$, ausgedrückt in Grad, zwischen 20 und 50 liegt.

3. Flexible Leitung bzw. Schlauch nach Anspruch 1, dadurch gekennzeichnet, daß das Verhältnis $\tfrac{K_t}{K_p}$ der Steifigkeiten sowie der Winkel $\alpha$ den Beziehungen

$$0{,}90 < \tfrac{K_t}{K_p} (0{,}056\,\alpha - 0{,}0008\,\alpha^2 - 0{,}65) < 1{,}10$$

genügen, wobei der Wert $\alpha$, ausgedrückt in Grad, zwischen 25 und 45 beträgt.

4. Flexible Leitung bzw. Schlauch nach einem der vorhergehenden Ansprüche, dadurch gekennzeichnet, daß die gegen Innendruck beständige Bewehrung aus einem Material hergestellt ist, dessen Elastizitätsmodul $E_p$ klar kleiner als der Elastizitätsmodul $E_t$ des die zugbeständige Bewehrung bildenden Materials ist.

5. Flexible Leitung bzw. Schlauch nach Anspruch 4, dadurch gekennzeichnet, daß die druckbeständige Bewehrung aus einem bewehrten Harz und die zugbeständige Bewehrung aus Stahl hergestellt ist.

## Claims

1. Reinforced flexible pipe comprising a reinforcement (2) resisting the internal pressure having at least one layer (2a, 2b) formed of rings, wires, cables or extruded sections wound at a high angle with respect to the axis of the pipe and a reinforcement (3) resisting tractive forces including at least a pair of cross layers (3a, 3b, 3c, 3d) of wires, cables or extruded sectione wound at an angle at most equal to 55° with respect to the axis of the pipe, characterized in that the ratio $\tfrac{K_t}{K_p}$ of the stiffness of the reinforcement resisting tractive forces to the stiffness of the reinforcement resisting the internal pressure is between 2.5 and 8 for a value $\alpha$ of the winding angle of the reinforcement withstanding the tractive force between 20° and 50° with respect to the axis of the pipe, the stiffness k of each reinforcement being defined by the product $k = E.e$, where E is the modulus of elastlcity of the material forming the reinforcement considered and e is the total useful thickness of this reinforcement.

2. Flexible pipe according to claim 1, characterized in that the ratio $\tfrac{K_t}{K_p}$ of the stiffnesses and the angle $\alpha$ satisfies the relationships

$$0.75 < \tfrac{K_t}{p} (0.056\,\alpha - 0.0008\,\alpha^2 - 0.65) < 1.25$$

the value of $\alpha$, expressed in degrees, being between 20 and 50.

3. Flexible pipe according to claim 1, characterized in that the ratio $\tfrac{K_t}{K_p}$ of the stiffnesses and the angle $\alpha$ satisfy the relationships:

$$0.90 < \tfrac{K_t}{K_p} (0.056\,\alpha - 0.0008\,\alpha^2 - 0.65) < 1.10$$

the value of a expressed in degrees being between 25 and 45.

4. Flexible pipe according to any one of the preceding claims, characterized in that the reinforcement resisting the internal pressure is made from a material whose modulus of elasticity $E_p$ is appreciably smaller than the modulus of elasticity $E_t$ of the material forming the traction resistant reinforcement.

5. Flexible pipe according to claim 4, characterized in that the reinforcement withstanding the pressure is made from reinforced resin and the reinforcement withstanding tractive forces is made from steel.

0 147 288

PL_unique

**FIG.1**

**FIG.3**

**FIG.2**

**FIG.4**

1

2

3a 3b

3

4

4

3d 3c 3b 3a 2 1

4 2b 3b 3a 2a 1 5

3

3a 3b

+α

−α